(19)

Europäisches
Patentamt
European
Patent Office
Office européen
des brevets

(11)  EP 3 202 843 A1

(12)  **EUROPEAN PATENT APPLICATION**

(43) Date of publication:
09.08.2017 Bulletin 2017/32

(21) Application number: 16153739.4

(22) Date of filing: 02.02.2016

(51) Int Cl.:
*C08L 23/12* (2006.01)  *C08L 23/14* (2006.01)
*D01F 6/30* (2006.01)  *C08L 83/04* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Basell Poliolefine Italia S.r.l.
20127 Milano (IT)

(72) Inventors:
• Galvan, Monica
44122 Ferrara (IT)

• Pradella, Fiorella
44122 Ferrara (IT)
• De Palo, Roberto
44122 Ferrara (IT)
• Marti Porqueres, Jaume
43206 Reus (ES)

(74) Representative: Colucci, Giuseppe
Basell Poliolefine Italia S.r.l.
Intellectual Property
Piazzale G. Donegani 12
44122 Ferrara (IT)

(54)  **POLYOLEFIN-BASED COMPOSITIONS, FIBERS, AND RELATED MULTI-LAYERED STRUCTURES PREPARED THEREFROM**

(57)  A polyolefin-based composition having a high Melt Flow Rate (comprised between 5 and 50 g/10min), which comprises a propylene homopolymer, or a random copolymer with another alpha-olefin, is here described. Fibers and nonwoven fabrics derived from this polyolefin-based composition are also here disclosed.

EP 3 202 843 A1

**Description**

FIELD

In general, the present disclosure relates to the field of chemistry. More specifically, the present disclosure relates to polyolefin-based compositions useful as fibers, including fibrils and cut filaments (staple fibers). The fibers of the present disclosure are particularly sutable for use in applications where a good balance of tenacity, elongation at break and softness is required. In particular, the fibers of the present disclosure are specifically suitable for the manufacture of spunbonded non-woven fabrics.

BACKGROUND

Nonwoven tissues or fabrics are desired for use in a variety of products such as bandaging materials, clothes, disposable diapers, and other personal hygiene products, including pre-moistened wipes. Nonwoven tissues having high levels of tenacity, elongation and softness are desirable for disposable absorbent clothes, such as diapers, incontinence pads, training pants, feminine hygiene products, and the like. For example, in a disposable diaper, it is highly desirable to have soft, strong, nonwoven components, such as topsheets or backsheets (also known as outer covers). Topsheets form the inner, body-contacting, portion of a diaper which renders softness highly valuable. Backsheets profit from the look of being cloth-like, and softness adds to the cloth-like perception consumers desire.

A variety of fibers and fabrics have been made from thermoplastics, such as polypropylene or co-polymers of propylene with other olefins, such as for example ethylene. Generally speaking, fibers and fabrics made of co-polymers of proylene with ethylene exhibit improved softness with respect to those made of polypropylene homopolymer. It would be useful to have fibers made of polypropylene maintaing the good properties of the homopolymer (strength, elongation), while at the same time exhibting a higher softness.

Accordingly, there is a continuing unaddressed need for a nonwoven fibers and fabrics with greater softness, while maintaining good levels of tenacity and elongation.

EP Patent 2586825 describes a high flow soft polypropylene composition containing RAHECO, i.e. a heterophasic propylene copolymer, comprising a random propylene copolymer and an elastomeric propylene copolymer dispersed therein, and a polysiloxane. The resulting polymer composition is useful to produce injection molded articles, but would be unsuitable for producing fibers or fabrics. According to the above patent, polysiloxane is added to the heterophasic propylene copolymer to improve the scratch resistance of the molded articles obtained therefrom, thus improving its optical properties.

SUMMARY

The object of this disclosure is a polyolefin composition having a high Melt Flow Rate (comprised between 5 and 50 g/10min, between 10 and 40 g/10min or between 15 and 30 g/10min), which comprises a propylene homopolymer, or a random copolymer with another alpha-olefin, as well as fibers and nonwoven fabrics derived therefrom. Nonwoven tissues or fabrics are desired for use in a variety of products such as bandaging materials, clothes, hospital gowns and laboratory coats, sterile wrap, headrest covers, table cloths, diaper back sheets and face masks, disposable absorbent clothes, such as diapers, incontinence pads, training pants, feminine hygiene products and other personal hygiene products, including for example pre-moistened wipes. The Melt Flow Rate is herein intended to be determined by using the standard method ISO 1133 (230° C, 2.16 kg).

In particular embodiments, the present disclosure provides a polyolefin-based composition having a Melt Flow Rate comprised between 5 and 50 g/10min, made from or containing:

(A) from about 99.00 to about 99.95 weight percent of a thermoplastic polyolefin, relative to the total weight of the polyolefin-based composition, made from or containing propylene, prepared by the homopolymerization of propylene or by copolymerization of propylene and another alpha-olefin, or a mixture containing both propylene homopolymer and copolymer; and

(B) from about 0.050 to about 1 weight percent of a siloxane polymer, relative to the total weight of the polyolefin-based composition.

In some embodiments, the present disclosure provides a fiber made from or containing the polyolefin-based composition.

According to a specific embodiment the present disclosure relates to polyolefin compositions having a Melt Flow Rate comprised between 5 and 50 g/10min comprising a propylene homopolymer as well as fibers and nonwoven fabrics derived therefrom.

Nonwoven fabrics produced from the fibers of this polyolefin composition exhibit a desirable combination of acceptable tensile strength, superior elongation in the transverse direction, good processability and improved softness and drapability.

While multiple embodiments are disclosed, still other embodiments will become apparent to those skilled in the art from the following detailed description. As will be apparent, certain embodiments, as disclosed herein, are capable of modifications in various aspects, all without departing from the spirit and scope of the claims as presented herein. Accordingly, the drawings and detailed description are to be regarded as illustrative in nature and not restrictive.

DETAILED DESCRIPTION

As used in this specification and the claims, the singular forms "a," "an," and "the" include plural referents unless the context dictates otherwise.

As used in this specification and the claims, the terms "comprising," "containing," or "including" mean that at least the named compound, element, material, particle, or method step, etc., is present in the composition, the article, or the method, but does not exclude the presence of other compounds, elements, materials, particles, or method steps, etc., even if the other such compounds, elements, materials, particles, or method steps, etc., have the same function as that which is named, unless expressly excluded in the claims. It is also to be understood that the mention of one or more method steps does not preclude the presence of additional method steps before or after the combined recited steps or intervening method steps between those steps expressly identified.

Moreover, it is also to be understood that the lettering of process steps or ingredients is a means for identifying discrete activities or ingredients and the recited lettering can be arranged in any sequence, unless expressly indicated.

For the purpose of the present description and of the claims which follow, except where otherwise indicated, numbers expressing amounts, quantities, percentages, and so forth, are to be understood as being modified by the term "about". Also, ranges include any combination of the maximum and minimum points disclosed and include any intermediate ranges therein, which may or may not be specifically enumerated herein.

Definitions

In the present description, the term "additives composition" refers to a composition made from or containing at least one additive.

In the present description, the term "$\alpha$-olefin" or "alpha-olefin" means an olefin of formula $CH2=CH-R$, wherein R is hydrogen or a linear or branched alkyl containing from 1 to 10 carbon atoms. The $\alpha$-olefin can be selected, for example, from: ethylene, 1-butene, 1-pentene, 1-hexene, 1-octene, 1-dodecene and the like.

In the present description, the term "amorphous polyolefin" means an olefinic polymer having a crystallinity from 0.001 to about 5 weight percent, based upon the total weight of the olefinic polymer.

In the present description, the term "crystalline polyolefin" means an olefinic polymer having a crystallinity of more than about 70 weight percent and less than about 93 weight percent, based upon the total weight of the olefinic polymer.

In the present description, the term "homopolymer" as used herein is consistent with its ordinary meaning. To the extent that a homopolymer may contain one or more monomeric units, the incorporation of any additional monomeric units has no measurable effect on the polymer's primary, secondary, or tertiary structure or no effect on the polymer's physical or chemical properties. In other words, there is no measureable difference between a polymer comprising 100 weight percent of a first monomeric unit, and a co-polymer that includes more than one monomeric units.

In the present description, the terms "monomer" and "comonomer" are used interchangeably. The terms mean any compound with a polymerizable moiety that is added to a reactor in order to produce a polymer. In those instances in which a polymer is described as comprising one or more monomers, e.g., a polymer comprising propylene and another alpha-olefin, the polymer, of course, comprises units derived from the monomers, e.g., $-CH_2-CH_2-$, and not the monomer itself, e.g., $CH_2=CH_2$.

To faciliate that discussion, various polymer acronyms are used herein. When referring to blends of polymers, the description may use a colon (:) to indicate that the components to the left and right of the colon are blended. When referring to a multi-layer structure, the description may use a slash "/" to indicate that components to the left and right of the slash are in different layers and the relative position of components in layers may be so indicated by use of the slash to indicate layer boundaries.

In the present description, the term "polymer" means a macromolecular compound prepared by polymerizing monomers of the same or different type. The term "polymer" includes homopolymers, copolymers, terpolymers, interpolymers, and so on.

In the present description, the term "polymer composition" refers to a composition made from or containing at least one polymer.

In the present description, the term "polyolefin" is used herein broadly to include polymers such as polyethylene, ethylene-alpha olefin copolymers (EAO), polypropylene, polybutene, and ethylene copolymers having at least about 50 percent by weight of ethylene polymerized with a lesser amount of a comonomer such as vinyl acetate, and other polymeric resins within the "olefin" family classification.

Polyolefins may be made by a variety of processes including batch and continuous processes using single, staged or sequential reactors, slurry, solution, and fluidized bed processes and one or more catalysts including for example, heterogeneous and homogeneous systems and Ziegler, Phillips, metallocene, single-site, and constrained geometry catalysts to produce polymers having different combinations of properties.

In the present description, the term "room temperature" refers to a temperature around +23 °C.

In the present description, the term "semiamorphous polyolefin" means an olefinic polymer having a crystallinity of from about 5 to about 30 weight percent, based upon the total weight of the olefinic polymer.

In the present description, the term "semicrystalline polyolefin" means an olefinic polymer having a crystallinity of more than about 30 weight percent and less than about 70 weight percent, based upon the total weight of the olefinic polymer.

In the present description, the term "thermoplastic polymer" means a polymer that softens when exposed to heat and returns to its original condition when cooled to room temperature.

Testing

ISO 1133 is entitled "Test Method for Melt Flow Rates of Thermoplastics by Extrusion Plastometer." The term "ISO 1133" as used herein refers to the standard test method for determining Melt Flow Rates of thermoplastics by extrusion plastometer. In general, this test method covers the determination of the rate of extrusion of molten thermoplastic resins using an extrusion plastometer. After a specified preheating time, resin is extruded through a die with a specified length and orifice diameter under prescribed conditions of temperature, load, and piston position in the barrel. This test method was approved on February 1, 2012 and published March 2012, the contents of which are incorporated herein by reference in its entirety.

Throughout the present description and claims, the standard Melt Flow Rate values of polypropylene polymers are measured according to ISO 1133, using a piston load of 2.16 kg and at a temperature of 230 degrees Celsius. Melt Flow Rate: Determined according to the method ISO 1133 (230° C, 2.16 kg).

Polydispersity Index (PI): it is determined at a temperature of 200°C by using a parallel plates rheometer model RMS-800 marketed by RHEOMETRICS (USA), operating at an oscillation frequency which increases from 0.1 rad/sec to 100 rad/sec. From the crossover modulus, one can derive the P.I. by way of the equation:

$$\text{P.I.} = 10^5/\text{Gc}$$

in which Gc is the crossover modulus which is defined as the value (expressed in Pa) at which G'=G" wherein G' is the storage modulus and G" is the loss modulus.

Ethylene content of the polymers (C2 content): it has been determined by IR spectroscopy.

The spectrum of a pressed film of the polymer is recorded in absorbance vs. wavenumbers (cm$^{-1}$). The following measurements are used to calculate C2 content:

   a) Area (At) of the combination absorption bands between 4482 and 3950 cm$^{-1}$ which is used for spectrometric normalization of film thickness.

   b) Area ($A_{C2}$) of the absorption band due to methylenic sequences ($CH_2$ rocking vibration) after a proper digital subtraction of an isotactic polypropylene (IPP) reference spectrum. The range 660 to 790 cm$^{-1}$.

Melting temperature (Tm) and crystallization temperature (Tc): they are both determined by differential scanning calorimetry (DSC). A sample weighting 6 $\pm$1 mg is heated to 220 $\pm$1° C at a rate of 20 °C/min and kept at 220 $\pm$1° C for 2 minutes in nitrogen stream and it is thereafter cooled at a rate of 20° C/min to 40 $\pm$2° C, thereby kept at this temperature for 2 min to crystallise the sample. Then, the sample is again fused at a temperature rise rate of 20° C/min up to 220° C $\pm$1. The melting scan is recorded, a thermogram is obtained, and, from this, melting temperatures and crystallization temperatures are read.

Max Spin Speed: the value corresponds to the highest spinning rate that can be maintained for 30 minutes with no filament break.

Titre of fibres: from a 10 cm long roving, 50 fibres are randomly chosen and weighed. The total weight of the said 50 fibres, expressed in mg, is multiplied by 2, thereby obtaining the titre in dtex.

Tenacity and elongation at break: from a 500 m roving a 100 mm long segment is cut. From this segment the single fibres to be tested are randomly chosen. Each single fibre to be tested is fixed to the clamps of an Instron dinamometer (Model 1122) and tensioned to break with a traction speed of 20 mm/min for elongations lower than 100% and 50mm/min for elongations greater than 100%, the initial distance between the clamps beingof 20 mm. The ultimate strength (load at break) and the elongation at break are determined. The tenacity is derived using the following equation: Tenacity = Ultimate strength (cN) x 10/titre (dtex).

Softness index is a conventional measure of fibres' flexibility, calculated as weight [1/g] of a bundle, whose length is determined in standard conditions. Softness values, so obtained, are in excellent agreement with the results of the empirical tests on non wovens. The apparatuses used fo such analysis are the following:

- Twist measuring device (Torcimentro by Negri e Bossi Spa)
- Analytical balance (by Mettler)
- Softness tester (by Clark).

The sample is prepared by providing a fibre bundle of about 4,000 dtex in linear density and 0.6 m in length. The ends of the bundle are fixed on the clamps of the twist measuring device and a 120 leftward twist runs is applied. The twisted bundle is taken off from the device (carefully avoiding any untwisting). The two ends of the twisted bundle are taken in the same side and the halves winded around each other until the bundle assumes the stable form of a cord. Three specimens of each test at least are prepared. The bundle is bended in two and the ends fixed between the rolls of the Clark softness tester, leaving a distance of 1 cm between the two halves. The plane of the device is rotated rightward and stopped, when the bundle reverses its bending direction, taking note of the rotation angle (a). Subsequentely the plane rotated leftward and again stopped, when the bundle reverses its bending side. Take note of the rotation angle (b). The height of the bundle above the two rolls is adjusted so to have the sum a $\pm$ b equal to 90° +/- 1° and this height is measured with a proper device (sensitivity 1 mm). Each of the two angles, a and b, should not exceed the limits of 45° +/-15°. The bundle is taken off from the device and cut to an height corresponding to that previously measured. The cut bundle is weighed by an analytical balance with a precision of 0.1 mg. The Softness index can be calculated from: S.I. = (1/W) * 100, in which W is the weight, in grams, of the cut bundle. The final result is the average of the 3 samples. The sensitivity in measuring the bundle weight is 0.1 mg.

In a general embodiment, the present disclosure relates to a polyolefin-based composition, having a Melt Flow Rate comprised between 5 and 50 g/10min, made from or containing:

A. from about 99.00 to about 99.95 weight percent of a thermoplastic polyolefin, relative to the total weight of the polyolefin-based composition, made from or containing propylene, prepared by the homopolymerization of propylene or by copolymerization propylene and another aplha-olefin, or a mixture containing both propylene homopolymer and copolymer; and

B. from about 0.05 to about 1 weight percent of a siloxane polymer, relative to the total weight of the polyolefin-based composition.

In an embodiment the thermoplastic polyolefin is propylene homopolymer.

Examples of such propylene homopolymer are commerially available from LyondellBasell Industries or its authorised licensees under the trademark MOPLEN®, like for example MOPLEN® HP552K, used in the production of high tenacity staple fibres for nonowens, MOPLEN® HP552L, used in in the production of staple fibres for nonowens, . MOPLEN® HP552N, used in the production of continuous filaments and fine denier staple fibres carpets and nonwovens, MOPLEN® HP552R, designed for the production of continuous filaments (CF), bulk continuous filaments (BCF) and fine denier staple fibres for carpets and nonwovens, MOPLEN® HP554M, designed for the production of fine denier staple fibres for thermal-bonded nonwovens, MOPLEN® HP561R, used in the production of continuous filaments high-tenacity yarns (HTY) and spunbond nonwovens and MOPLEN® HP462R, used in the production of continuous filaments for high-tenacity yarns (HTY) and spunbond nonwovens.

In an embodiment the thermoplastic polyolefin is a random copolymer prepared by copolymerization of ethylene and propylene, which has an ethylene content from about 0.5 to about 10 weight percent, relative to the weight of the random copolymer.

Examples of such random copolymer are commercially available from LyondellBasell Industries or its authorised licensees under the trademark MOPLEN®, like for example MOPLEN® RP1669, used in the production of soft continuous filament applications and for the production of PP-based undergarments.

In an embodiment the thermoplastic polyolefin is a mixture containing both propylene homopolymer and co-polymer in any ratio.

In an embodiment the siloxane polymer is a ultra-high molecular weight siloxane polymer.

Examples of such siloxane polymer are commercially available from Dow Coming and belong to the commercial series MB Siloxane Masterbatch, like for example MB50-001 Masterbatch, which is a pelletized formulation containing 50% of an ultra-high molecular weight siloxane polymer dispersed in polypropylene (PP) homopolymer.

The polypropylenes include amorphous polypropylene, semicrystalline polypropylene, the like, and mixtures thereof. Copolymers of propylene include random copolymers and impact copolymers. In some embodiments, $\alpha$-olefins for such copolymers include ethylene, 1-butene, 1-pentene, 1-hexene, methyl-1-butenes, methyl-1-pentenes, 1-octene, 1-decene, the like, and mixtures thereof. The semicrystalline polypropylene can have a Melt Flow Rate from about 0.001 to about 500 grams per 10 minutes, a density from about 0.897 to about 0.925 grams per cubic centimeter, and a weight average molecular weight (Mw) within the range of 85,000 to 900,000.

In an embodiment the polyolefin-based composition has a Melt Flow Rate comprised between 5 and 50 g/10min.

In another embodiment the polyolefin-based composition has a Melt Flow Rate comprised between 10 and 40 g/10min.

In still another embodiment the polyolefin-based composition has a Melt Flow Rate comprised between 15 and 30 g/10min.

The Melt Flow Rate is herein intended to be determined by using the standard method ISO 1133.

In an embodiment the polyolefin-based composition has a Polydisperisty Index comprised between 2 and 5.

In an embodiment the polyolefin-based composition has a Tm comprised between 130 and 166 °C.

In an embodiment the polyolefin-based composition has a Tc comprised between 80 and 125 °C.

In an embodiment the polyolefin-based composition has a Max Spin Speed comprised between 1,000 and 6,000 m/min.

In another embodiment the polyolefin-based composition has a Max Spin Speed comprised between 2,000 and 5,000 m/min.

In an embodiment the polyolefin-based composition has a Titre comprised between 0.5 and 10 dtex.

In another embodiment the polyolefin-based composition has a Titre comprised between 1 and 8 dtex.

In another embodiment the polyolefin-based composition has a Titre comprised between 2 and 6 dtex.

In an embodiment the polyolefin-based composition has a Tenacity comprised between 15 and 40 cN/dtex.

In another embodiment the polyolefin-based composition has a Tenacity comprised between 20 and 35 cN/dtex.

In an embodiment the polyolefin-based composition has an Elongation comprised between 50 and 500%.

In another embodiment the polyolefin-based composition has an Elongation comprised between 100 and 400%.

In an embodiment the polyolefin-based composition has a Softness comprised between 500 and 1,200 l/g.

In another embodiment the polyolefin-based composition has a Softeness between 600 and 1,100 l/g.

In another embodiment the polyolefin-based composition has a Softness between 650 and 1,000 l/g.

Additives Composition

In some embodiments, the polyolefin-based composition is further made from or to contain an additives composition.

In those embodiments, the additives composition is present in an amount from about 0 to about 5 weight percent, relative to the total weight of the polyolefin-based composition. In other embodiments, the additives composition is present in an amount of 1, 2, 3, 4, or 5 weight percent, relative to the total weight of the polyolefin-based composition.

Exemplary additives include colorants, odorants, deodorants, plasticizers, impact modifiers, nucleating agents, lubricants, surfactants, wetting agents, flame retardants, ultraviolet light stabilizers, antioxidants, biocides, metal deactivating agents, thickening agents, heat stabilizers, defoaming agents, coupling agents, polymer alloy compatibilizing agent, blowing agents, emulsifiers, crosslinking agents, waxes, particulates, flow promoters, and other materials added to enhance processability or end-use properties of the polymeric components.

Fibers

In some embodiments, the present disclosure provides a fiber made from or containing the polyolefin-based composition.

Fibers or filaments comprising the polyolefin-based composition of the present disclosure may be prepared using processes and apparatuses well known in the art, i.e. by melt-spinning the polyolefin-based composition in conventional devices suitable for producing single or composite fibers or filaments.

According to a further embodiment, the fibers or filaments may have a "sheathcore structure". By "fibers or filaments having a sheath-core structure" is meant herein fibers or filaments having an axially extending interface and comprising at least two components, i.e. at least an inner core and at least an outer sheath, said at least two components comprising different polymeric materials and being joined along the axially extending interface. In sheathcore fibers or filaments the sheath thickness may be uniform or the sheath thickness may not be uniform around the circumference of a fiber or filament cross-section. Said fibers or filaments having sheath-core structure can be produced using conventional melt-spin equipments having concentric annular dies. The polyolefin-based composition of the present diclosure may be conveniently used to for the outer sheath of fibers or filaments having a sheath-core structure.

The inner core may comprise any polymeric material commonly used for spunbonding applications, depending on the desired end properties of the composite fibers or filaments such as (but not exclusively) another polyolefin or a polyammide.

According to certain embodiments, the sheath-core fibers or filaments comprise 50-90 wt%, or 65-80 wt%, of polymeric material forming the core-layer and 10-50 wt%, or 20-35 wt%, of the copolymer of propylene and 1-pentene forming the outer sheath layer.

According to a specific embodiment, the sheath-core fibers or filaments comprise 70 wt% of polymeric-material forming the core layer and 30 wt% of the polyolefin-based composition forming the outer sheath.

Another embodiment is a non-woven fabric comprising the fibers of the present disclosure.

Such non-woven fabrics may be produced with various methods, such as through the well-known spunbonding technique.

The spunbonding process is a non-woven manufacturing technique, whereby polymers are directly converted into endless filaments and stochastically deposited to form a non-woven material.

The spunbonding process combines the fibre spinning and the web formation into a single production process. Fibres are formed as the molten polymer exits the spinnerets, normally quenched by cool air and the filaments are pulled away from the spinneret by high pressure air. Then the filaments are deposited onto a moving belt forming a non-woven fabric. The fabric weight is determined by the throughput per spinneret hole, the number of holes and the speed of the moving belt. Subsequently, the fabric can be bonded by different methods, such as thermal bonding, chemical bonding or needle punching.

By thermal bonding the fabric is passed between calender rolls heated at a temperature that, depending on the embodiment, is comprised in the range from 110° to 150°C or from 120° to 130°C.

The thermally bonded articles may comprise two or more non-woven layers. Thanks to the use of the fibres of the present disclosure a good adhesion among the layers is obtained.

EXAMPLES

The following examples are included to demonstrate embodiments. It should be appreciated by those of skill in the art that the techniques disclosed in the examples which follow represent techniques discovered to function well, and thus can be considered to constitute exemplary modes of practice. However, those of skill in the art should, in light of the present disclosure, appreciate that many changes can be made in the specific embodiments which are disclosed and still obtain a like or similar result without departing from the spirit and scope of this disclosure.

Comparative Examples 1 and 4 and Examples 2, 3 and 5

For the comparative examples and the examples of an embodiment, various compounds were formulated to prepare test specimen. The materials were admixed in the weight percents shown in Table 1.

Polymers: for the comparative examples and as starting materials for preparing the polyolefin-based composition according to this disclsoure, MOPLEN® HP561R (PP) was used as homopolymer polypropylene, and MOPLEN® RP340H (RCP) was used as random copolymer propylene-ethylene having an ethylene content (C2) of about 3% by weight relative to the weight of the same random copolymer. Prior to the use, MOPLEN® RP340H was subject to visbreaking with LUPEROX® 101 in extrusion phase to bring its MFR at values 25.

As siloxane polymer, the Siloxane Masterbatch MB50-001 from Dow Coming was used.

Compounding Conditions

All components were dry blended. Then, the formulated materials were melt compounded.

Extrusion

Then the polymer mixture is placed in a twin screw extruder Berstorff (L/D=33) and extruded in the following operating conditions:

- • - temperature of feeding part: 190-210° C;
- • - melt temperature: 235-245° C;
- • - temperature of die part: 210° C;
- • - flow rate: 15 kg/h;

- - rotational speed of the screw: 250 rpm.

The properties of the thus obtained polymers are reported on Table 1.

**Table 1 - Properties of polymers**

| Variable Name | Units | Ex. 1 (Comp.) | Ex.2 | Ex.3 | Ex.4 (Comp.) | Ex.5 |
|---|---|---|---|---|---|---|
| Polymer | | PP | PP | PP | RCP | RCP |
| Silicone MB | | 0 | 0.3% | 0.6% | 0 | 0.2% |
| Melt Flow Rate | g/10min | 24.9 | 22.7 | 23.4 | 23.4 | 25.6 |
| PI | NR | 2.5 | 2.5 | 2.6 | 2.3 | 2.2 |
| C2 | % | 0 | 0 | 0 | 3 | 3 |
| Tm | °C | 160.6 | 159.8 | 159.5 | 149 | 148.1 |
| Tc | °C | 106.2 | 106.6 | 106.3 | 104.2 | 104,3 |

Preparation of the fibers

After extrusion the polymers are spun in a Leonard 25 spinning pilot line with screw L/D ratio of 25, screw diameter of 25 mm and compression ratio of 1:3. The line is marketed by Costruzioni Meccaniche Leonard-Sumirago (VA). The operative spinning conditions are here reported:

- Hole diameter: mm 0.6
- Output per hole: g/min 0.6
- Hole number in the die: 37
- Die temperature (°C): 250
- Melt temperature (°C): 258.

The properties of the filaments are reported on Table 2.

**Table 2 - Properties of filaments**

| Variable Name | Units | Ex. 1 (Comp.) | Ex.2 | Ex.3 | Ex. 4 (Comp.) | Ex.5 |
|---|---|---|---|---|---|---|
| Polymer | | PP | PP | PP | RCP | RCP |
| Silicone MB | | 0 | 0.3% | 0.6% | 0 | 0.2% |
| Max spin speed | m/min | 4,200 | 3,300 | 2,700 | 4,200 | 3,300 |
| titre | dtex | 2.2 | 2.2 | 2.2 | 2.2 | 2.2 |
| Tenacity | cN/tex | 21.8 | 29 | 27.7 | 31.7 | 34,3 |
| Elongation | % | 285 | 315 | 315 | 165 | 170 |
| Softness | l/gr | 870 | 960 | 955 | 930 | 995 |

The maximum spinning speed gives indication of the spinnability of the propylene polymer composition of the present disclosure. The value corresponds to the highest spinning rate that can be maintained for 30 minutes with no filament break.

From Table 2 it is clear that the fibers obtained by using the polyolefin-based composition of the present disclosure show enhanced properties in terms of tenacity, elongation at break and softness with respect to the staring materials (not containing the polysiloxane polymer).

It should be understood that various changes, substitutions and alterations can be made herein without departing from the spirit and scope of this disclosure as defined by the appended claims. Moreover, the scope of the present application is not intended to be limited to the particular embodiments of the process, machine, manufacture, composition of matter, means, methods and steps described in the specification. As one of the ordinary skill in the art will readily appreciate from the disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture, compositions of matter, means, methods, or steps.

**Claims**

1. A polyolefin-based composition comprising a polyolefin-based composition, having a Melt Flow Rate comprised between 5 and 50 g/10min (determined by using the standard method ISO 1133), made from or containing:

   A. from about 99.00 to about 99.95 weight percent of a thermoplastic polyolefin, relative to the total weight of the polyolefin-based composition, made from or containing propylene, prepared by the homopolymerization of propylene or by copolymerization propylene and another aplha-olefin, or a mixture containing both propylene homopolymer and copolymer; and
   B. from about 0.05 to about 1 weight percent of a siloxane polymer, relative to the total weight of the polyolefin-based composition.

2. The polyolefin-based composition according to claim 1, wherein the thermoplastic polyolefin is propylene homopolymer.

3. The polyolefin-based composition according to claim 1, wherein the thermoplastic polyolefin is a random copolymer prepared by copolymerization of ethylene and propylene, which has an ethylene content of from about 0.5 to about 10 weight percent, relative to the weight of the random copolymer.

4. The polyolefin-based composition according to claim 1, wherein the thermoplastic polyolefin is a mixture containing both propylene homopolymer and copolymer.

5. The polyolefin-based composition according to any of claims from 1 to 4, wherein the siloxane polymer is a ultra-high molecular weight siloxane polymer.

6. The polyolefin-based composition according to any preceding claim, which has a Melt Flow Rate comprised between 5 and 50 g/10min.

7. The polyolefin-based composition according to any preceding claim, which has a Max Spin Speed comprised between 1,000 and 6,000 m/min.

8. The polyolefin-based composition according to any preceding claim, which has a Titre comprised between 0.5 and 10 dtex.

9. The polyolefin-based composition according to any preceding claim, which has a Tenacity comprised between 15 and 40 cN/dtex.

10. The polyolefin-based composition according to any preceding claim, which has an Elongation at break comprised between 50 and 500%.

11. The polyolefin-based composition according to any preceding claim, which has a Softness comprised between 500 and 1,200 l/g.

12. A fiber made from or containing the polyolefin-based composition of any one of claims 1 to 11.

13. A fabric comprising the fiber of claim 12.

14. The fabric according to claim 13, which is a nonwoven fabric.

15. The fabric according to claim 12 or 13, which is obtained by spunbonding technique.

Europäisches
Patentamt

European
Patent Office

Office européen
des brevets

# EUROPEAN SEARCH REPORT

Application Number

EP 16 15 3739

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 96/11982 A1 (KIMBERLY CLARK CO [US]) 25 April 1996 (1996-04-25) * examples 1,2 * * claims 1,2 * ----- | 1-15 | INV. C08L23/12 C08L23/14 D01F6/30 C08L83/04 |
| X | EP 1 081 257 A1 (TECHMER P M [US]) 7 March 2001 (2001-03-07) * claims 1,22 * * paragraph [0062] * * paragraph [0085] * ----- | 1-15 | |
| X | EP 0 014 442 A1 (BAYER AG [DE]) 20 August 1980 (1980-08-20) * example 1; table 1 * * page 8, line 2 - line 12 * ----- | 1,3,5,6 | |
| A | WO 2007/140163 A2 (DOW GLOBAL TECHNOLOGIES INC [US]; PENG HONG [US]; CLAASEN GERT J [CH];) 6 December 2007 (2007-12-06) * claim 1 * * page 16, line 8 - line 10 * * abstract * ----- | 1-15 | |

TECHNICAL FIELDS
SEARCHED      (IPC)

C08L
D01F

The present search report has been drawn up for all claims

| Place of search | Date of completion of the search | Examiner |
|---|---|---|
| Munich | 11 March 2016 | van Bergen, Marc |

EPO FORM 1503 03.82 (P04C01)

## ANNEX TO THE EUROPEAN SEARCH REPORT
## ON EUROPEAN PATENT APPLICATION NO.

EP 16 15 3739

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2016

| Patent document cited in search report | | Publication date | Patent family member(s) | | Publication date |
|---|---|---|---|---|---|
| WO 9611982 | A1 | 25-04-1996 | AU | 700153 B2 | 24-12-1998 |
| | | | AU | 3675695 A | 06-05-1996 |
| | | | BR | 9509129 A | 02-09-1997 |
| | | | CN | 1160412 A | 24-09-1997 |
| | | | DE | 69513417 D1 | 23-12-1999 |
| | | | DE | 69513417 T2 | 06-07-2000 |
| | | | EP | 0785968 A1 | 30-07-1997 |
| | | | ES | 2138238 T3 | 01-01-2000 |
| | | | KR | 100373814 B1 | 16-05-2003 |
| | | | PL | 319609 A1 | 18-08-1997 |
| | | | TW | 493022 B | 01-07-2002 |
| | | | US | 5667750 A | 16-09-1997 |
| | | | US | 5744548 A | 28-04-1998 |
| | | | WO | 9611982 A1 | 25-04-1996 |
| EP 1081257 | A1 | 07-03-2001 | AT | 287464 T | 15-02-2005 |
| | | | DE | 69923307 D1 | 24-02-2005 |
| | | | DE | 69923307 T2 | 12-01-2006 |
| | | | EP | 1081257 A1 | 07-03-2001 |
| | | | ES | 2237045 T3 | 16-07-2005 |
| | | | JP | 4459333 B2 | 28-04-2010 |
| | | | JP | 2001081626 A | 27-03-2001 |
| | | | KR | 20010019129 A | 15-03-2001 |
| | | | US | 6146757 A | 14-11-2000 |
| EP 0014442 | A1 | 20-08-1980 | DE | 2905356 A1 | 21-08-1980 |
| | | | EP | 0014442 A1 | 20-08-1980 |
| | | | JP | S55110143 A | 25-08-1980 |
| | | | US | 4292222 A | 29-09-1981 |
| WO 2007140163 | A2 | 06-12-2007 | BR | PI0711223 A2 | 23-08-2011 |
| | | | CN | 101495692 A | 29-07-2009 |
| | | | EP | 2029356 A2 | 04-03-2009 |
| | | | JP | 2009538394 A | 05-11-2009 |
| | | | KR | 20090014302 A | 09-02-2009 |
| | | | RU | 2008151413 A | 27-06-2010 |
| | | | TW | 200809021 A | 16-02-2008 |
| | | | US | 2009111347 A1 | 30-04-2009 |
| | | | WO | 2007140163 A2 | 06-12-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2586825 A